Europäisches Patentamt

European Patent Office

Office européen des brevets

(19)

(11) Veröffentlichungsnummer : **0 163 896**
**B1**

(12) **EUROPÄISCHE PATENTSCHRIFT**

(45) Veröffentlichungstag der Patentschrift :
**14.02.90**

(21) Anmeldenummer : **85104866.0**

(22) Anmeldetag : **22.04.85**

(51) Int. Cl.⁵ : **A 47 J 31/057**, A 47 J 31/06

(54) **Elektrische Kaffeemaschine mit Tropfschutzventil am Filterboden.**

(30) Priorität : **03.05.84 DE 3416403**

(43) Veröffentlichungstag der Anmeldung :
**11.12.85 Patentblatt 85/50**

(45) Bekanntmachung des Hinweises auf die Patenterteilung : **14.02.90 Patentblatt 90/07**

(84) Benannte Vertragsstaaten :
**DE FR GB IT NL**

(56) Entgegenhaltungen :
**EP–A– 0 019 291**
**DE–A– 2 538 685**
**DE–A– 2 605 957**
**DE–U– 1 970 143**
**DE–U– 7 436 286**

(73) Patentinhaber : **Braun Aktiengesellschaft**
**Rüsselsheimer Strasse 22**
**D-6000 Frankfurt/Main (DE)**

(72) Erfinder : **Wunder, Dieter**
**Kirchstrasse 9**
**D-6131 Reichelsheim 6 (DE)**

(74) Vertreter : **Einsele, Rolf**
**Braun Aktiengesellschaft Postfach 1120 Frankfurter**
**Strasse 145**
**D-6242 Kronberg Taunus (DE)**

## Beschreibung

Die Erfindung betrifft eine dem Oberbegriff des Patentanspruches 1 entsprechende elektrische Kaffeemaschine mit einem Tropfschutzventil an der Ausflußöffnung ihres Filtertrichters. Derartige Tropfschutzventile sollen verhindern, daß aus dem Kaffeefilter weiterhin Kaffee ausfließt, wenn nach Beendigung des Brühvorgangs die Kaffeekanne entfernt oder der Filtertrichter mit dem darin befindlichen, mit Brühwasser durchtränkten Kaffeemehl durch Herausschwenken, -heben oder -ziehen aus der Kaffeemaschine entnommen wird.

Es ist eine Reihe von Kaffeemaschinen mit derartigen Tropfschutzventilen bekannt, denen gemeinsam ist, daß die Ventilbetätigung mittels eines Tastgliedes erfolgt, das durch den Deckel der ordnungsgemäß positionierten Kaffeekanne aus seiner Ruhestellung ausgelenkt wird und hierdurch das Ventil öffnet. Typische Betätigungssysteme dieser Art sind z. B. in der DE-PS 25 38 685, dem DE-GM 19 70 143, der DE-AS 26 05 957 und dem DE-GM 74 36 286 beschrieben und dargestellt. Sie weisen durchweg den Mangel auf, daß sie ihre Aufgabe der exakten Ventilbetätigung nur dann erfüllen, wenn eine zugehörige Gebrauchsanweisung genau eingehalten wird wenn also beispielsweise die Kaffeekanne in einer ganz bestimmten Richtung und Orientierung zur Kaffeemaschine entnommen oder eingesetzt wird. Insbesondere führt bei ihnen im allgemeinen bereits eine geringe Ungeschicklichkeit dazu, daß der Tastmechanismus durch den Deckelrand ausgelenkt wird und das Ventil öffnet, wenn sich die Kaffeekanne erst oder nur noch teilweise unter dem Filtertrichter befindet. Außerdem hängt die Funktionssicherheit der bekannten Anordnungen entscheidend davon ab, daß sämtliche Maßtoleranzen sowohl im Betätigungssystem als auch seitens des Kaffeemaschinengehäuses als auch bei der Kaffeekanne und der Kontur ihres Deckels exakt eingehalten werden, was bereits bei der Herstellung und Zusammenstellung der Einzelteile nicht unproblematisch ist und unter Verschleißbedingungen unter Einbeziehung von Ersatzteilen häufig unüberwindliche Schwierigkeiten verursacht.

Aufgabe der Erfindung ist es, ein Tropfschutzventil für einen Filtertrichter einer Kaffeemaschine zu schaffen, das erst dann öffnet, wenn sich der Filtertrichter wie auch die Kaffeekanne ordnungsgemäß in ihrer Soll-Arbeitsposition befinden ».

Diese Aufgabe wird durch das im Patentanspruch 1 gekennzeichnete erfindungsgemäße Zwei-Hebel-System gelöst. Dieses System hat den Vorteil, daß die Öffnung des Tropfschutzventils erst dann erfolgen kann, wenn zwei Bedingungen erfüllt sind, und zwar müssen sich sowohl der Filtertrichter als auch die Kaffeekanne zumindest annähernd in ihrer Soll-Arbeitsposition befinden, um durch das Zusammenwirken des erfindungsgemäßen Tasthebels mit dem erfindungsgemäßen Aktivierungshebel das Tropfschutzventil zu öffnen. Vorzugsweise wird der sogenannte Aktivierungshebel dadurch in seine Arbeitsstellung gebracht, daß der Filtertrichter in seine Arbeitsposition eingesetzt oder eingeschwenkt wird. Dies geschieht insbesondere dadurch, daß der Filtertrichter beim Einsetzen oder Einschwenken in seine Arbeitsposition an einer Wandung des Kaffeemaschinengehäuses so zur Anlage kommt, daß der Aktivierungshebel durch Teile dieser Wandung in seine Arbeitsstellung ausgelenkt wird. Vorzugsweise ist an einer entsprechenden Stelle der Gehäusewandung zu diesem Zweck eine Auflauframpe vorgesehen, auf der der Aktivierungshebel erst auf setzt, wenn der Filtertrichter seine Endposition nahezu erreicht hat und von der er sofort abhebt, wenn der Filtertrichter nur geringfügig aus seiner Soll-Position entfernt wird. Vorzugsweise geschieht die Aktivierung des Tasthebels in der Weise, daß er aus einer Ruheposition, in der er vom Kaffeekannendeckel unter keinen Umständen erreichbar ist, durch den Aktivierungshebel in eine Tastposition geschwenkt wird, in der der Kaffeekannendeckel ihn zum Öffnen des Tropfschutzventils beaufschlagen kann, sobald die Kaffeekanne annähernd in ihre Soll-Position gebracht worden ist. Dabei ist es besonders vorteilhaft, wenn die Hebelgeometrie so gewählt ist, daß der durch die Auslenkung des Aktivierungshebels in Tastposition gebrachte und gehaltene Tasthebel durch den Kannendeckel in seine Ruheposition zurückgeschwenkt wird und durch dieses Zurückschwenken das Tropfschutzventil öffnet.

In einer besonders vorteilhaften Ausführungsform der Erfindung befindet sich der Tasthebel in seiner und des Aktivierungshebels Ruhestellung oberhalb der Gehäuseunterkante des Filtertrichters und wird erst durch die Auslenkung des Aktivierungshebels in den Raum unterhalb dieser Gehäuseunterkante ausgeschwenkt. Hierdurch ist es möglich, den Filtertrichter aus der Kaffeemaschine zu entnehmen und ihn mit seiner Gehäuseunterkante auf einer Standfläche — beispielsweise auf einer Tischplatte — abzustellen, ohne daß der Tasthebel durch die Standfläche ausgelenkt wird und das Tropfschutzventil öffnen kann.

Besonders günstige Voraussetzungen bezüglich der Hebelgeometrie, des Raumbedarfs und des Herstellungsaufwandes lassen sich bei dem erfindungsgemäßen Hebelsystem dadurch erzielen, daß die Auslenkung des Tasthebels und des Aktivierungshebels in derselben radial zur senkrechten Filterachse verlaufenden Wirkebene erfolgt sowie dadurch, daß der Tasthebel, der Aktivierungshebel und der Schließkörper des Tropfschutzventils so aneinander angelenkt sind, daß dasselbe an einem der beiden Hebel angreifende Federelement beide Hebel in ihre Ruhestellung und den Schließkörper in seine Schließstellung drückt bzw. zieht.

Die den Aktivierungshebel auslenkende Auflauframpe ist vorzugsweise so angebracht und ausgebildet, daß der Aktivierungshebel beim Einsetzen bzw. Einschwenken des Filtertrichters auf ihr aufsetzt, sobald der Filtertrichter sich seiner Arbeitsposition bis auf höchstens 3 cm und mindestens 1 cm genähert hat. Es hat sich gezeigt, daß bei Einhaltung dieses Abstandsbereiches der verbleibende Einsetz- bzw. Einschwenkweg des Filtertrichters ausreicht, um den Aktivierungshebel voll auszulenken und damit den Tasthebel durch Auslenkung in seine Tastposition zu aktivieren. Andererseits ist hierdurch gewährleistet, daß sich der Filtertrichter bereits hinreichend genau über der Kaffeekanne befindet, wenn der Tasthebel gegen den Kannendeckel gelenkt wird und hierdurch das Tropfschutzventil öffnet. Vorzugsweise wird hierbei das durch den Aktivierungshebel ausgelenkte äußere Ende des Tasthebels durch den umlaufenden Rand des Kannendeckels beaufschlagt, sobald der radiale Abstand der Kaffeekanne von ihrer Soll-Position einen Wert von höchstens 5 cm und mindestens 0,5 cm unterschreitet.

Eine weitere bevorzugte Ausführungsform der Erfindung ist dadurch gekennzeichnet, daß die Anlenkachse, über die der Aktivierungshebel und der Tasthebel miteinander in Wirkverbindung stehen, in einem Langloch gelagert ist, das die infolge der Hebelgeometrie auftretenden Verschiebungen dieser Achse aufnimmt. Zur Erzielung eines großen Auslenkweges des Tasthebels, der das erfindungsgemäße Ventilbetätigungssystem weitgehend unempfindlich gegenüber Toleranzabweichungen bei den Maßen der zusammenwirkenden Teile macht, ist die wirksame Schwenkachse des Tasthebels, um die dieser durch den Aktivierungshebel ausgelenkt wird, vom äußeren Ende des Tasthebels mindestens viermal soweit entfernt, wie die Anlenkachse, mit der der Aktivierungshebel am Tasthebel angreift.

Weitere vorteilhafte Ausführungsformen, Abwandlungen und Ausgestaltungen des erfinderischen Grundprinzips sind aus der beigefügten Zeichnung ersichtlich :

Figur 1 zeigt in einer Seitenansicht — teilweise aufgebrochen und geschnitten — eine bevorzugte Ausführungsform der erfindungsgemäßen Kaffeemaschine, wobei die erfindungswesentlichen Einzelteile der besseren Übersichtlichkeit halber z.T. schematisch dargestellt sind.

Figur 2 zeigt einen Schnitt durch die Kaffeemaschine gemäß Figur 1 entlang der Linie II-II.

Die Figuren 3a bis 3g geben bevorzugte Hebelsysteme gemäß der vorliegenden Erfindung wieder und zeigen schematisch — jeweils in nicht aktiviertem Zustand, d. h., bei geschlossenem Tropfschutzventil — wie die Ausführungsformen gemäß den Patentansprüchen 16 bis 22 vorteilhaft realisiert werden können (das in Figur 3a wiedergegebene System ist mit der in Figur 1 eingezeichneten Anordnung identisch).

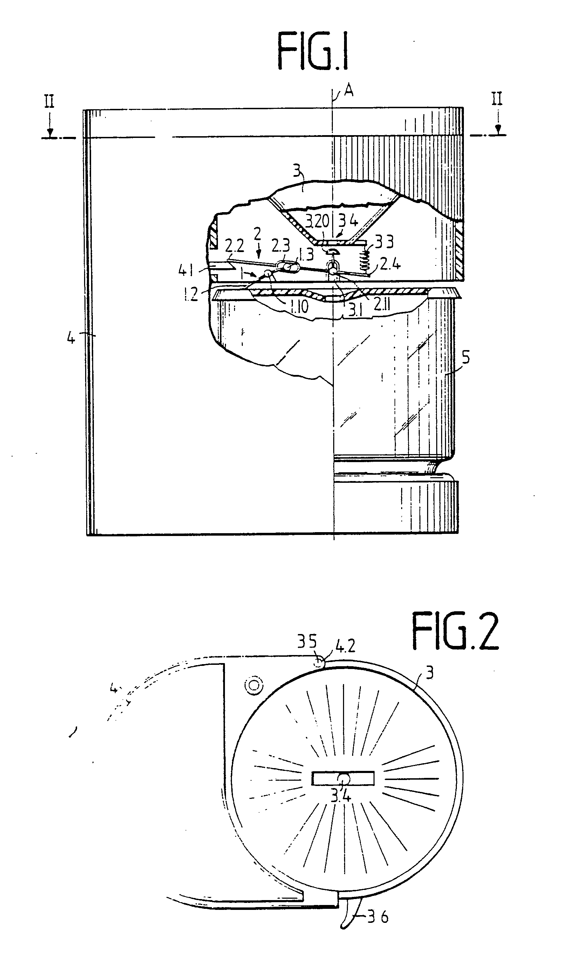

Wie in den Figuren 1 und 2 im einzelnen zu erkennen ist, besteht die erfindungsgemäße Kaffeemaschine aus einem Gerätegehäuse 4, in dem die üblichen Bestandteile wie Wassertank, Durchlauferhitzer, Warmhalteplatte, Kaltwasserfallrohr zwischen Wassertank und Durchlauferhitzer und Brühwassersteigrohr vom Durchlauferhitzer zum Filtertrichter angeordnet sind, sowie aus dem herausnehmbaren Filtertrichter 3 und der Kaffeekanne 5. Im Filtertrichter 3 ist unterhalb des Tropfschutzventils 3.4 das zur Betätigung des Ventil-Schließkörpers 3.20 dienende erfindungsgemäße Doppelhebelsystem angeordnet. Dieses besteht im wesentlichen aus dem Tasthebel 1 und dem Aktivierungshebel 2, der in dem dargestellten Zustand an seinem äußeren Ende 2.2 durch die an der Wandung des Gerätegehäuses 4 angeordnete Auflauframpe 4.1 ausgelenkt ist und der durch seine Auslenkung den über das Langloch 2.3 und die Anlenkachse 1.3 angekoppelten Tasthebel 1 um seine filterfeste Achse 1.10 gedreht hat, so daß dessen äußeres Ende 1.2 auf dem Rand des Kaffeekannendeckels zur Anlage gebracht ist und sich auf diesem abstützt.

Durch das Zusammenwirken der Auslenkungen des Tasthebels 1 und des Aktivierungshebels 2 ist die horizontale Achse 2.11 des Aktivierungshebels 2, die in der filterfesten senkrechten Führung 3.1 vertikal beweglich ist, gegen die Kraft des am inneren Ende 2.4 des Aktivierungshebels angreifenden und andererseits am Filtertrichter 3 angelenkten Federelementes 3.3 nach unten verschoben worden. Hierdurch ist der Schließkörper 3.20, der im Bereich der Achse 2.11 — vorzugsweise flexibel — an den Aktivierungshebel angelenkt ist, von der Öffnung des Tropfschutzventils 3.4 nach unten abgezogen und nimmt in Fig. 1 seine Offen-Stellung ein.

Wird der in Figur 1 dargestellte Zustand durch Entnahme der Kaffeekanne 5 verändert, so bewirkt das Federelement 3.3, daß gleichzeitig das äußere Ende 1.2 des Tasthebels nach unten klappt und die Achse 2.11 zusammen mit dem Schließkörper 3.20 sich nach oben bewegt, wodurch Letzterer das Tropfschutzventil 3.4 schließt. Wird der dargestellte Zustand dagegen durch Entnahme des Filtertrichters 3 verändert, so gleitet das äußere Ende 2.2 des Aktivierungshebels 2 nach unten von der Auflauframpe 4.1 ab, und das Federelement 3.3 schwenkt den Aktivierungshebel 2 um seine Anlenkachse 1.3, so daß sich auch in diesem Fall die vertikal bewegliche Achse 2.11 in der senkrechten Führung 3.1 ebenso wie der Schließkörper 3.20 nach oben bewegt und das Tropfschutzventil 3.4 verschlossen wird. Es ist in Figur 1 deutlich erkennbar, daß bereits eine geringe horizontale Verschiebung der Kaffeekanne 5 oder des Filtertrichters 3 ausreicht, um den Tasthebel 1 vom Kannenrand oder den Aktivierungshebel 2 von der Auflauframpe herabgleiten zu lassen, was unmittelbar das Verschließen des Tropfschutzventils zur Folge hat.

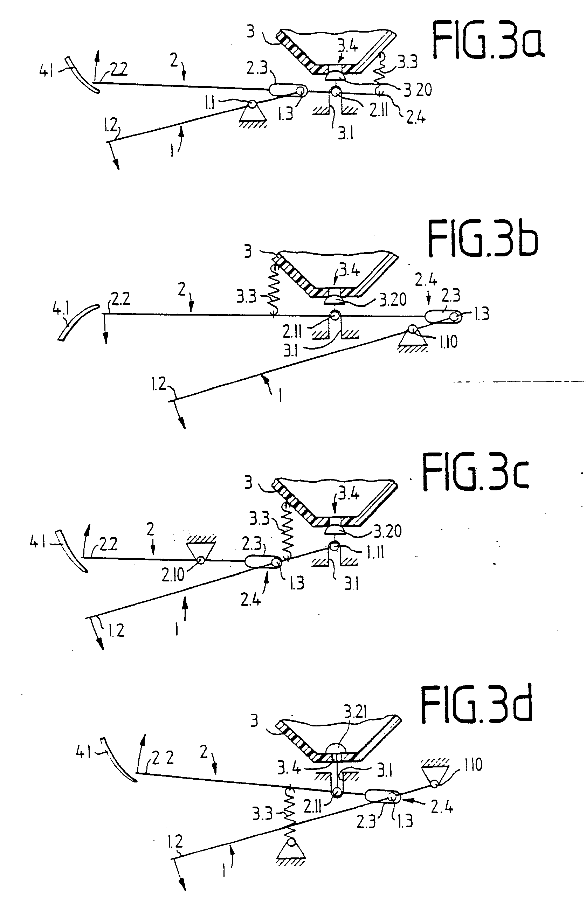

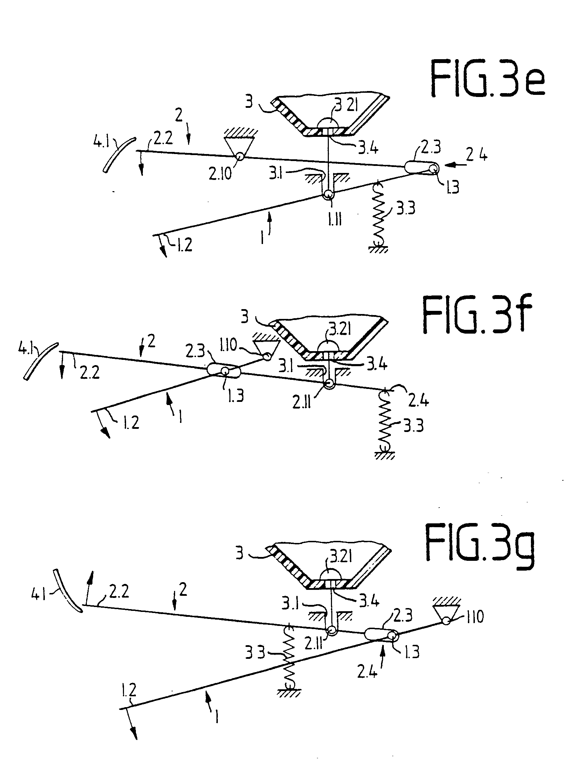

Neben dem vorstehend beschriebenen, besonders vorteilhaften Zwei-Hebel-System, das in Figur 3a noch einmal in seiner Ruhestellung dargestellt ist, sind im Rahmen der vorliegenden Erfindung eine Reihe von ebenfalls zweckmäßigen Ausführungsformen möglich, von denen die vorteilhaftesten in den Figuren 3b bis 3g — sämtlich in ihrer Ruhestellung — wiedergegeben sind. Sie unterscheiden sich im einzelnen insbesondere dadurch, daß der Aktivierungshebel 2 durch die Auflauframpe 4.1 anstatt nach oben auch nach unten ausgelenkt werden kann, ferner dadurch, daß anstelle des das Tropfschutzventil 3.4 von unten verschließenden Schließkörpers 3.20 ein von oben dichtender Schließkörper 3.21 verwendet werden kann, sowie durch die Hebelgeometrie, d. h. durch die Anordnung der filterfesten und vertikal verschieblichen Schwenklager, der Langlochanlenkung der beiden Hebel und des Angriffspunktes des Federelementes 3.3 relativ zu der durch das Tropfschutzventil 3.4 definierten senkrechten Filterachse A. In jedem Fall führt die Auslenkung des Aktivierungshebels 2 dazu, daß der Tasthebel 1 nach unten ausgelenkt wird.

Das vorzugsweise als Abschluß der senkrechten Führung 3.1 der vertikal beweglichen Achsen 1.11 und 2.11 vorgesehene, nach unten oder nach oben offene Stützlager ist gegebenenfalls so angeordnet, daß die Achsen 1.11, 2.11 genau dann an ihm zur Anlage kommen, wenn der Schließkörper 3.20, 3.21 des Tropfschutzventils 3.4 seine Dichtposition erreicht hat.

In allen Ausführungsformen weist die Auflauframpe 4.1 vorzugsweise eine Rastkerbe auf, in die das äußere Ende 2.2 des Aktivierungshebels 2 bei dessen höchster Auslenkung, d. h. bei Erreichen der Soll-Position des Filtertrichters gleitend einrastet. Durch die sinnvolle Hebelgeometrie des erfindungsgemäßen Zwei-Hebel-Systems erfährt diese Rastung eine zusätzliche Verstärkung genau in dem Zustand, in dem sie wichtig ist, nämlich dann, wenn die unter dem Filtertrichter in die Kaffeemaschine eingesetzte Kaffeekanne entnommen werden soll; denn der durch die Kaffeekannenoberseite ausgelenkte Tasthebel beaufschlagt den Aktivierungshebel 2 in Richtung der Auflauframpe 4.1 und verstärkt also dessen Anpreßdruck in der Rastung genau so lange, bis beim Entnehmen der Kaffeekanne die Haftreibung des Tasthebel s auf der Kannenoberseite in die geringere Gleitreibung übergegangen ist und somit keine Gefahr mehr besteht, daß durch die Entnahme der Kanne auch der Filtertriehter mitgerissen wird.

Vorzugsweise ist der entnehmbare Filtertrichter gemäß der vorliegenden Erfindung als sogenannter Schwenkfilter ausgebildet, der um eine vertikale, an seiner Peripherie angebrachte Schwenkachse aus dem Kaffeemaschinengehäuse herausgeschwenkt werden kann. In einer besonders vorteilhaften Ausführungsform ist diese Schwenkachse durch zwei übereinander angeordnete Achsstummel 3.5 realisiert, die mit Lager-Ösen 4.2 zusammenwirken und ein leichtes Einhängen und Entnehmen des Filtertrichters 3 ermöglichen. Durch die in den Unteransprüchen 25 bis 27 gekennzeichneten bevorzugten Ausführungsformen dieser Schwenklager wird die Handhabung des Filtertrichters bei der Entnahme und beim Wiedereinsetzen wesentlich erleichtert, während der Vorteil der Ausführungsform gemäß Anspruch 28 in der besonders rationellen Herstellungsmöglichkeit liegt.

Bezugszeichen-Liste

1 Tasthebel
1.10 Schwenkachse von 1, filterfest gelagert
1.11 Schwenkachse von 1, vertikal beweglich in 3.1
1.2 äußeres Ende von 1
1.3 Anlenkachse Tasthebel/Aktivierungshebel
2 Aktivierungshebel
2.10 Schwenkachse von 2, filterfest gelagert
2.11 Schwenkachse von 2, vertikal beweglich in 3.1
2.2 äußeres Ende von 2
2.3 Langloch zur Anlenkachse 1.3
2.4 inneres Ende von 2
3 Filtertrichter
3.1 senkrechte Führung der Schwenkachse 1.11 oder 2.11
3.20 Schließkörper, von unten dichtend
3.21 Schließkörper, von oben dichtend
3.3 Federelement
3.4 Tropfschutzventil
3.5 Achsstummel (Filtertrichter-Schwenklager)
3.6 Griff
4. Gerätegehäuse
4.1 Auflauframpe
4.2 Lager-Öse (Filtertrichter-Schwenklager)
5 Kaffeekanne
5.1 Kannendeckel
A Filterachse

**Patentansprüche**

1. Elektrische Kaffeemaschine mit Tropfschutzventil (3.4) an der Ausflußöffnung eines vom Kaffeemaschinengehäuse (4) abnehmbaren und/oder wegschwenkbaren Filtertrichters (3), wobei das Tropfschutzventil (3.4) durch ein Federelement (3.3) in Schließrichtung beaufschlagt ist und mittels eines am Filtertrichter (3) drehbar gelagerten durch die Oberseite der daruntergestellten Kaffeekanne (5) — insbesondere ihres Deckels — auslenkbaren Tasthebels (1) in Offen-Stellung gebracht und gehalten wird, dadurch gekennzeichnet, daß zusätzlich ein Aktivierungshebel (2) vorgesehen ist, der mit dem Tasthebel (1) so in Wirkverbindung steht, daß beim Einbringen der Kaffeekanne (5) und des Filtertrichters (3) in ihre jeweilige Arbeitstellung zunächst der Aktivierungshebel (2) aus seiner Ruhestellung in seine Arbeitsstellung ausgelenkt wird, bevor der Tasthebel (1) durch den Kannendeckel (5.1) zum Öffnen des Tropfschutzventils (3.4) ausgelenkt wird.

2. Kaffeemaschine nach Anspruch 1, dadurch gekennzeichnet, daß der Aktivierungshebel (2) durch Einsetzen oder Einschwenken des Filtertrichters (3) in dessen Arbeitsposition in seine Arbeitsstellung auslenkbar ist.

3. Kaffeemaschine nach Anspruch 2, dadurch gekennzeichnet, daß der Filtertrichter beim Einsetzen oder Einschwenken in seine Arbeitsposition an einer Wandung des Kaffeemaschinengehäuses (4) so zur Anlage kommt, daß der Aktivierungshebel (2) durch Teile dieser Wandung in seine Arbeitsstellung ausgelenkt wird.

4. Kaffeemaschine nach Anspruch 3, dadurch gekennzeichnet, daß die Gehäusewandung zur Auslenkung des Aktivierungshebels (2) eine Auflauframpe (4. 1) aufweist.

5. Kaffeemaschine nach einem der Ansprüche 1 bis 4, dadurch gekennzeichnet, daß der Tasthebel (1) durch die Auslenkung des Aktivierungshebels (2) in seine Tastposition schwenkbar ist, in der — und nur in der — er durch den Kannendeckel (5.1) zum Öffnen des Tropfschutzventils (3.4) beaufschlagbar ist.

6. Kaffeemaschine nach Anspruch 5, dadurch gekennzeichnet, daß der Tasthebel (1) sich in seiner und des Aktivierungshebels (2) Ruhestellung oberhalb der Gehäuseunterkante des Filtertrichters (3) erstreckt und durch die Auslenkung des Aktivierungshebels (2) in den Raum unterhalb der Unterkante des Filtertrichtergehäuses ausschwenkbar ist.

7. Kaffeemaschine nach einem der Ansprüche 5 oder 6, dadurch gekennzeichnet, daß der durch die Auslenkung des Aktivierungshebels (2) in Tastposition gebrachte und gehaltene Tasthebel (1) durch den Kannendeckel (5.1) in Richtung seiner Ruheposition zurückschwenkbar ist, wobei sein Zurückschwenken das Öffnen des Tropfschutzventils (3.4) bewirkt.

8. Kaffeemaschine nach einem der Ansprüche 1 bis 7, dadurch gekennzeichnet, daß der Tasthebel (1), der Aktivierungshebel (2) und der Schließkörper (3.20, 3.21) des Tropfschutzventils (3.4) so aneinander angelenkt sind, daß dasselbe, an einem der beiden Hebel (1 oder 2) angreifende Federelement (3.3) beide Hebel (1 und 2) in ihre Ruhestellung und den Schließkörper (3.20, 3.21) in seine Schließstellung drückt bzw. zieht.

9. Kaffeemaschine nach einem der Ansprüche 1 bis 8, dadurch gekennzeichnet, daß der Tasthebel (1) und der Aktivierungshebel (2) in derselben radial zur senkrechten Filterachse (A) verlaufenden Wirkebene schwenkbar sind.

10. Kaffeemaschine nach einem der Ansprüche 4 bis 9, dadurch gekennzeichnet, daß das äußere Ende (2.2) des in seiner Ruhestellung befindlichen Aktivierungshebels (2) beim Einsetzen bzw. Einschwenken des Filtertrichters (3) auf der Auflauframpe (4.1) aufsetzt, sobald der Filtertrichter sich seiner Arbeitsposition bis auf, höchstens 3 cm und mindestens 1 cm genähert hat.

11. Kaffeemaschine nach einem der Ansprüche 4 bis 10, dadurch gekennzeichnet daß die Auflauframpe (4.1) eine Rastung für das äußere Ende (2.2) des Aktivierungshebels (2) aufweist, in die dieses bei Erreichen der Arbeitsstellung des Aktivierungshebels (2) gleitend einrastet.

12. Kaffeemaschine nach einem der Ansprüche 1 bis 11, dadurch gekennzeichnet, daß das durch den Aktivierungshebel (2) ausgelenkte äußere Ende (1.2) des Tasthebels (1) durch den umlaufenden Rand des Kannendeckels (5.1) beaufschlagbar ist, sobald der radiale Abstand der Kaffeekanne von ihrer Soll-Position einen Wert von höchstens 5 cm und mindestens 0,5 cm unterschreitet.

13. Kaffeemaschine nach einem der Ansprüche 1 bis 12, dadurch gekennzeichnet, daß der Tasthebel (1) und der Aktivierungshebel (2) über eine in einem Langloch (2.3) gelagerte Anlenkachse (1.3) miteinander in Wirkverbindung stehen.

14. Kaffeemaschine nach einem der Ansprüche 1 bis 13, dadurch gekennzeichnet, daß die Auslenkung des Tasthebels (1) durch den Aktivierungshebel (2) um eine Schwenkachse (1.10, 1.11) erfolgt, von der das äußere Ende (1.2) des Tasthebels (1) einen mindestens 4 mal so großen Abstand hat wie die Anlenkachse (1.3) des Aktivierungshebels (2).

15. Kaffeemaschine nach einem der Ansprüche 1 bis 14, dadurch gekennzeichnet, daß der Schließkörper (3.20, 3.21) am Tast- oder Aktivierungshebel (1 oder 2) im Bereich von dessen Schwenkachse (1.11 bzw. 2.11) flexibel gelagert ist.

16. Kaffeemaschine nach einem der Ansprüche 1 bis 15, gekennzeichnet durch folgende Merkmale (Fig. 3a) :

der Aktivierungshebel (2) erstreckt sich — vorzugsweise etwa auf der Höhe des Tropfschutzventils (3.4) — von seinem äußeren Ende (2.2) radial auf die Filterachse (A) zu und mit seinem inneren Ende über diese hinaus ; er besitzt senkrecht unterhalb des Tropfschutzventils (3.4) eine horizontale Schwenkachse (2.11) die durch ein am inneren Hebelende (2.4) angreifendes, andererseits am Filtertrichter (3) abgestütztes Federelement (3.3) in einer filterfesten senkrechten Führung (3.1) nach oben — inbesondere gegen ein die Führung (3.1) abschließendes, nach unten offenes Stützlager — gedrückt wird ;

der Tasthebel (1) ist ein zweiarmiger Hebel mit filterfest gelagerter horizontaler Schwenkachse (1.10) ;

das innere Ende des Tasthebels (1) ist über eine in einem Langloch (2.3) geführte horizontale Achse (1.3) am Aktivierungshebel (2) zwischen dessen äußerem Ende (2.2) und dessen Schwenkachse (2.11) angelenkt ;

der von unten dichtende Schließkörper (3.20) des Tropfschutzventils (3.4) ist im Bereich der Schwenkachse (2.11) des Aktivierungshebels (2) an diesem befestigt.

die Auflauframpe (4.1) besitzt eine das äußere Ende (2.2) des Aktivierungshebels (2) nach oben auslenkende Auflaufschräge.

17. Kaffeemaschine nach einem der Ansprüche 1 bis 15, gekennzeichnet durch folgende Merkmale (Fig. 3b) :

der Aktivierungshebel (2) erstreckt sich — vorzugsweise etwa auf Höhe des Tropfschutzventils (3.4) — von seinem äußeren Ende (2.2) radial auf die Filterachse (A) zu und mit seinem inneren Ende über diese hinaus ; er besitzt senkrecht unterhalb des Tropfschutzventils (3.4) eine horizontale Schwenkachse (2.11), die durch ein zwischen der Schwenkachse (2.11) und dem äußeren Hebelende (2.2) angreifendes, andererseits am Filtertrichter (3) abgestütztes Federelement (3.3) in einer filterfesten, senkrechten Führung (3.1) nach oben — insbesondere gegen ein die Führung abschließendes, nach unten offenes Stützlager — gedrückt wird ;

der Tasthebel (1) ist ein zweiarmiger Hebel mit filterfest gelagerter, horizontaler Schwenkachse (1.10) ;

das innere Ende des Tasthebels (1) ist über eine in einem Langloch (2.3) geführte, horizontale Achse (1.3) am inneren Ende (2.4) des Aktivierungshebels (2) angelenkt ;

der von unten dichtende Schließkörper (3.20) des Tropfschutzventils (3.4) ist im Bereich der Schwenkachse (2.11) des Aktivierungshebels (2) an diesem befestigt ;

die Auflauframpe (4.1) besitzt eine das äußere Ende (2.2) des Aktivierungshebels (2) nach unten auslenkende Auflaufschräge.

18. Kaffeemaschine nach einem der Ansprüche 1 bis 15, gekennzeichnet durch folgende Merkmale (Fig. 3c) :

der Aktivierungshebel (2) ist ein zweiarmiger Hebel mit filterfest gelagerter, horizontaler Schwenkachse (2.10) und erstreckt sich — vorzugsweise etwa auf der Höhe des Tropfschutzventils (3.4) — von seinem äußeren Ende (2.2) radial auf die Filterachse (A) zu ;

der Tasthebel (1) ist an seinem inneren Ende durch eine horizontale Achse (1.11) in einer filterfest senkrecht unter dem Tropfschutzventil (3.4) angeordneten senkrechten Führung (3.1) beweglich gelagert, wobei diese Führung (3.1) vorzugsweise in einem nach unten offenen Stützlager endet ;

das innere Ende des Aktivierungshebels (2) ist über eine in einem Langloch (2.3) geführte Achse (1.3) an den Tasthebel (1) angelenkt, und der Tasthebel (1) wird durch ein zwischen dieser Anlenkung und seiner Schwenkachse (1.11) angreifendes, andererseits filterfest abgestütztes Federelement (3.3) in Richtung seiner Ruhestellung beaufschlagt ;

der von unten dichtende Schließkörper (3.20) des Tropfschutzventils (3.4) ist im Bereich der Schwenkachse (1.11) des Tasthebels (1) an diesem befestigt ;

die Auflauframpe (4.1) besitzt eine das äußere Ende (2.2) des Aktivierungshebels (2) nach oben auslenkende Auflaufschräge.

19. Kaffeemaschine nach einem der Ansprüche 1 bis 15, gekennzeichnet durch folgende Merkmale (Fig. 3d) :

der Aktivierungshebel (2) erstreckt sich — vorzugsweise etwa auf der Höhe des Tropfschutzventils (3.4) — von seinem äußeren Ende (2.2) radial auf die Filterachse (A) zu und mit seinem inneren Ende über diese hinaus ; er besitzt senkrecht unterhalb des Tropfschutzventils (3.4) eine horizontale Schwenkachse (2.11), die durch ein zwischen der Schwenkachse (2.11) und dem äußeren Hebelende (2.2) angreifendes, andererseits am Filtertrichter (3) abgestütztes Federelement (3.3) in einer filterfesten, senkrechten Führung (3.1) nach unten — insbesondere gegen ein die Führung abschließendes, nach oben offenes Stützlager gedrückt wird ;

der Tasthebel (1) ist ein einarmiger Hebel, der mit seinem inneren Ende an einer horizontalen, filterfest gelagerten Schwenkachse (1.10) angelenkt ist ;

das innere Ende des Aktivierungshebels (2) ist über eine in einem Langloch (2.3) geführte Achse (1.3) zwischen der Schwenkachse (1.10) und dem äußeren Ende (1.2) des Tasthebels (1) an diesen angelenkt ;

der von oben dichtende Schließkörper (3.21) des Tropfschutzventils (3.4)· ist im Bereich der Schwenkachse (2.11) des Aktivierungshebels (2) an diesem befestigt ;

die Auflauframpe (4.1) besitzt eine das äußere Ende (2.2) des Aktivierungshebels (2) nach oben auslenkende Auflaufschräge.

20. Kaffeemaschine nach einem der Ansprüche 1 bis 15, gekennzeichnet durch folgende Merkmale (Fig. 3e) :

der Aktivierungshebel (2) ist ein zweiarmiger Hebel mit filterfest gelagerter, horizontaler Schwenkachse (2.10) und erstreckt sich vorzugsweise etwa auf der Höhe des Tropfschutzventils (3.4) von seinem äußeren Ende (2.2) radial auf die Filterachse (A) zu ;

das innere Ende des Aktivierungshebels (2) ist über eine in einem Langloch (2.3) geführte Achse (1.3) an das innere Ende des Tasthebels (1) angelenkt ;

der Tasthebel (1) ist mittels einer zwischen seinem inneren Ende und seinem äußeren Ende (1.2) angebrachten horizontalen Achse (1.11) in einer filterfest senkrecht unter dem Tropfschutzventil (3.4) angeordneten senkrechten Führung (3.1) beweglich gelagert, wobei diese Führung (3.1) vorzugsweise in einem nach oben offenen Stützlager endet ; durch ein zwischen dem inneren Ende des Tasthebels und der Achse (1.11) am Tasthebel (1) angreifendes, andererseits filterfest abgestütztes Federelement (3.3) wird dieser in Richtung seiner Ruhestellung beaufschlagt ;

der von oben dichtende Schließkörper (3.21) des Tropfschutzventils (3.4) ist im Bereich der Schwenkachse (1.11) des Tasthebels (1) an diesem befestigt ;

die Auflauframpe (4.1) besitzt eine das äußere Ende (2.2) des Aktivierungshebels (2) nach unten auslenkende Auflaufschräge.

21. Kaffeemaschine nach einem der Ansprüche 1 bis 15, gekennzeichnet durch folgende Merkmale (Fig. 3f) :

der Aktivierungshebel (2) erstreckt sich — vorzugsweise etwa auf der Höhe des Tropfschutzventils (3.4) — von seinem äußeren Ende (2.2) radial auf die Filterachse (A) zu und mit seinem inneren Ende über diese hinaus ; er besitzt senkrecht unterhalb des Tropfschutzventils (3.4) eine horizontale Schwenkachse (2.11), die durch ein am inneren Hebelende (2.4) angreifendes, andererseits am Filtertrichter (3) abgestütztes Federelement (3.3) in einer filterfesten, senkrechten Führung (3.1) nach unten — insbesondere gegen ein die Führung (3.1) abschließendes, nach oben offenes Stützlager — gedrückt wird ;

der Tasthebel (1) ist ein einarmiger Hebel mit filterfest gelagerter, horizontaler Schwenkachse (1.10) ;

der Aktivierungshebel (2) ist zwischen seinem äußeren Ende (2.2) und seinem Schwenklager (2.11) über eine in einem Langloch (2.3) geführte Achse (1.3) an den Tasthebel (1) angelenkt, und zwar zwischen dessen Schwenkachse (1.10) und äußeren Ende (1.2) ;

der von oben dichtende Schließkörper (3.21) des Tropfschutzventils (3.4) ist im Bereich der Schwenkachse (2.11) des Aktivierungshebels (2) an diesem befestigt ;

die Auflauframpe (4.1) besitzt eine das äußere Ende (2.2) des Aktivierungshebels (2) nach unten auslenkende Auflaufschräge.

22. Kaffeemaschine nach einem der Ansprüche 1 bis 15, gekennzeichnet durch folgende Merkmale (Fig. 3g) :

der Aktivierungshebel (2) erstreckt sich — vorzugsweise etwa auf der Höhe des Tropfschutzventils (3.4) — von seinem äußeren Ende (2.2) radial auf die Filterachse (A) zu und mit seinem inneren Ende über diese hinaus ; er besitzt senkrecht unterhalb des Tropfschutzventils (3.4) eine horizontale Schwenkachse (2.11), die durch ein zwischen ihr und dem äußeren Ende (2.2) des Aktivierungshebels (2) angreifendes, andererseits am Filtertrichter (3) abgestütztes Federelement (3.3) in einer filterfesten, senkrechten Führung (3.1) nach unten — insbesondere gegen ein die Führung abschließendes, nach oben offenes Stützlager — gedrückt wird ;

der Tasthebel (1) ist ein einarmiger Hebel mit filterfester, horizontaler Schwenkachse (1.10) ;

der Aktivierungshebel (2) ist an seinem inneren Ende über eine in einem Langloch (2.3) geführte Achse (1.3) an den Tasthebel (1) angelenkt, und zwar zwischen dessen Schwenkachse (1.10) und äußeren Ende (1.2) ;

der von oben dichtende Schließkörper (3.21) des Tropfschutzventil s (3.4) ist im Bereich der Schwenkachse (2.11) des Aktivierungshebels (2) an diesem befestigt ;

die Auflauframpe (4.1) besitzt eine das äußere Ende (2.2) des Aktivierungshebels (2) nach oben auslenkende Auflaufschräge.

23. Kaffeemaschine nach einem der Ansprüche 1 bis 22, dadurch gekennzeichnet, daß der Filtertrichter (3) um eine an seiner Peripherie und an der Außenwandung des Kaffeemaschinengehäuses (4) senkrecht verlaufende Achse schwenkbar ist, wobei stehend aus je einem Achsstummel (3.5) und je einer Lager-Öse (4.2), vorgesehen sind.

24. Kaffeemaschine nach Anspruch 23, dadurch gekennzeichnet, daß der Filtertrichter (3) an den Schwenklagern (3.5, 4.2) lösbar eingehängt ist.

25. Kaffeemaschine nach Anspruch 24, dadurch gekennzeichnet, daß nur das eine der beiden Schwenklager sowohl radial führende als auch axial stützende Funktion hat, während das andere nur radial führend wirkt.

26. Kaffeemaschine nach einem der Ansprüche 23 bis 25, dadurch gekennzeichnet, daß die beiden Achsstummel (3.5) unterschiedliche Länge besitzen.

27. Kaffeemaschine nach Anspruch 26, dadurch gekennzeichnet, daß der Achsstummel des einen Schwenklagers nach unten und der Achsstummel des anderen Schwenklagers nach oben. gerichtet ist, wobei der Abstand der Fußpunkte der Achsstummel sich vom Abstand der Lager-Ösen um mehr als die Länge des kürzeren Achsstummels und um weniger als die Länge des längeren Achsstummels unterscheidet.

28. Kaffeemaschine nach einem der Ansprüche 23 bis 27, dadurch gekennzeichnet, daß die Achsstummel und die Lager-Ösen an den Filtertrichter (3) bzw. das Kaffeemaschinengehäuse (4) angeformt sind.

## Claims

1. An electric coffee maker having an anti-drip valve (3.4) disposed at the discharge opening of a filter funnel (3) which is adapted to be removed and/or swung away from the housing (4) of the coffee maker, with the anti-drip valve (3.4) being acted upon in the closing direction by a spring element (3.3) and being moved to and held in its open position by means of a sensing lever (1) which is pivotally mounted on the filter funnel (3) and is deflectable by the top of the coffee carafe (5) placed thereunder — particularly by its lid —, characterized by the added provision of an activating lever (2) which is in cooperative relation with the sensing lever (1) such that movement of the coffee carafe (5) and the filter funnel (3) to their respective working positions causes first the activating lever (2) to be deflected from its position of rest to its working position, before the sensing lever (1) is deflected by the carafe lid (5.1) for the purpose of opening the anti-drip valve (3.4).

2. The coffee maker as claimed in claim 1, characterized in that the activating lever (2) is deflectable to its working position by the filter funnel (3) being inserted or swung into its working position.

3. The coffee maker as claimed in claim 2, characterized in that the filter funnel, in being inserted or swung back into its working position, abuts a wall of the coffee maker housing (4) in such fashion that the activating lever (2) is deflected to its working position by parts of this wall.

4. The coffee maker as claimed in claim 3, characterized in that the housing wall includes an ascending ramp (4.1) for deflecting the activating lever (2).

5. The coffee maker as claimed in any one of the claims 1 to 4, characterized in that the sensing lever (1) is movable to its sensing position by the deflection of the activating lever (2), which sensing position is the only position in which it is adapted to be acted upon by the carafe lid (5.1) for the purpose of opening the anti-drip valve (3.4).

6. The coffee maker as claimed in claim 5, characterized in that in the positions of rest of the sensing lever (1) and the activating lever (2) the sensing lever (1) extends above the bottom edge of the housing of the filter funnel (3) and is adapted to be pivoted into the space below the bottom edge of the filter funnel housing on deflection of the activating lever (2).

7. The coffee maker as claimed in any one of the claims 5 or 6, characterized in that the sensing lever (1) moved into and held in the sensing position due to the deflection of the activating lever (2) is adapted to be pivoted back in the direction of its rest position by the carafe lid (5.1), this return motion causing the anti-drip valve (3.4) to open.

8. The coffee maker as claimed in any one of the claims 1 to 7, characterized in that the sensing lever (1), the activating lever (2) and the closure body (3.20, 3.21) of the anti-drip valve (3.4) are relatively coupled in such manner that the same spring element (3.3) that bears against one of the two levers (1 or 2) urges both levers (1 and 2) into their positions of rest while urging or pulling the closure body (3.20, 3.21) into its closed position.

9. The coffee maker as claimed in any one of the claims 1 to 8, characterized in that the sensing lever (1) and the activating lever (2) are adapted to pivot in the same plane of action extending radially to the vertical filter axis (A).

10. The coffee maker as claimed in any one of the claims 4 to 9, characterized in that the outer end (2.2) of the activating lever (2), in its position of rest, becomes seated on the ascending ramp (4.1) when the filter funnel (3) is inserted or swung into position, as soon as the filter funnel has come within a maximum of 3 cm and a minimum of 1 cm of its working position.

11. The coffee maker as claimed in any one of the claims 4 to 10, characterized in that the ascending ramp (4.1) includes a notch for locking engagement by the outer end (2.2) of the activating lever (2) when the activating lever (2) has reached its working position.

12. The coffee maker as claimed in any one of the claims 1 to 11, characterized in that the outer end (1.2) of the sensing lever (1) which is deflected by the activating lever (2) is adapted to be acted upon by the circumferential edge of the carafe lid (5.1) as soon as the radial distance of the carafe from its specified position falls below a value of between 5 cm, maximum and 0.5 cm, minimum.

13. The coffee maker as claimed in any one of the claims 1 to 12, characterized in that the sensing lever (1) and the activating lever (2) are operatively associated with each other through a coupling shaft (1.3) carried in an elongated hole (2.3).

14. The coffee maker as claimed in any one of the claims 1 to 13, characterized in that the sensing lever (1) is deflected by the activating lever (2) about a pivot shaft (1.10, 1.11) from which the outer end (1.2) of the sensing lever (1) is spaced at least four times the distance of the coupling shaft (1.3) of the activating lever (2).

15. The coffee maker as claimed in any one of the claims 1 to 14, characterized in that the closure body (3.20, 3.21) is flexibly mounted on the sensing or activating lever (1 or 2) in the area of its respective pivot shaft (1.11 or 2.11).

16. The coffee maker as claimed in any one of the claims 1 to 15, characterized by the following features (Fig. 3a) :

the activating lever (2) extends — preferably at approximately the level of the anti-drip valve (3.4) — from its outer end (2.2) radially towards the filter axis (A) while its inner end extends over and beyond the filter axis ; vertically below the anti-drip valve (3.4), it possesses a horizontal pivot shaft (2.11) which is urged upwardly in a vertical guideway (3.1) fast with the filter — particularly against a support bearing open in downward direction and terminating the guideway (3.1) — by means of a spring element (3.3) bearing with one end against the lever inner end (2.4) while its other end takes support upon the filter funnel (3) ;

the sensing lever (1) is a two-armed lever with a horizontal pivot shaft (1.10) mounted fast with the filter ;

the inner end of the sensing lever (1) is coupled to the activating lever (2) intermediate the latter's outer end (2.2) and pivot shaft (2.11) via a horizontal shaft (1.3) carried in an elongated hole (2.3) ;

the closure body (3.20) sealing the anti-drip valve (3.4) from below is secured to the activating lever (2) in the area of its pivot shaft (2.11) ;

the ascending ramp (4.1) possesses a bevelled portion deflecting the outer end (2.2) of the activating lever (2) in upward direction.

17. The coffee maker as claimed in any one of the claims 1 to 15, characterized by the following features (Fig. 3b) :

the activating lever (2) extends — preferably at approximately the level of the anti-drip valve (3.4) — from its outer end (2.2) radially towards the filter axis (A) while its inner end extends over and beyond the filter axis ; vertically below the anti-drip valve (3.4), it possesses a horizontal pivot shaft (2.11) which is urged upwardly in a vertical guideway (3.1) fast with the filter — particularly against a support bearing open in downward direction and terminating the guideway — by means of a spring element (3.3) bearing with one end against a point intermediate the pivot shaft (2.11) and the lever outer end (2.2) while its other end takes support upon the filter funnel (3) ;

the sensing lever (1) is a two-armed lever with a horizontal pivot shaft (1.10) mounted fast with the filter ;

the inner end of the sensing lever (1) is coupled to the inner end (2.4) of the activating lever (2) via a horizontal shaft (1.3) carried in an elongated hole (2.3) ;

the closure body (3.20) sealing the anti-drip valve (3.4) from below is secured to the activating lever (2) in the area of its pivot shaft (2.11) ;

the ascending ramp (4.1) possesses a bevelled portion deflecting the outer end (2.2) of the activating lever (2) in downward direction.

18. The coffee maker as claimed in any one of the claims 1 to 15, characterized by the following features (Fig. 3c) :

the activating lever (2) is a two-armed lever with a horizontal pivot shaft (2.10) mounted fast with the filter and extends — preferably at approximately the level of the anti-drip valve (3.4) — from its outer end (2.2) radially towards the filter axis (A) ;

at its inner end the sensing lever (1) is movably carried in a vertical guideway (3.1) arranged fast with the filter vertically underneath the anti-drip value (3.4) by means of a horizontal shaft (1.11), with the guideway (3.1) preferably terminating in a support bearing open in downward direction ;

the inner end of the activating lever (2) is coupled to the sensing lever (1) by means of a shaft (1.3) carried in an elongated hole (2.3), and the sensing lever (1) is acted upon in the direction of its rest position by a spring element (3.3) bearing with one end against a point intermediate this coupling and its pivot shaft (1.11) while its other end takes support upon the filter on which it is mounted ;

the closure body (3.20) sealing the anti-drip valve (3.4) from below is secured to the sensing lever (1) in the area of its pivot shaft (1.11) ;

the ascending ramp (4.1) possesses a bevelled portion deflecting the outer end (2.2) of the activating lever (2) in upward direction.

19. The coffee maker as claimed in any one of the claims 1 to 15, characterized by the following features (Fig. 3d) :

the activating lever (2) extends — preferably at approximately the level of the anti-drip valve (3.4) — from its outer end (2.2) radially towards the filter axis (A) while its inner end extends over and beyond the filter axis ; vertically below the anti-drip valve (3.4), possesses a horizontal pivot shaft (2.11) which is urged in a vertical guideway (3.1) fast with the filter — particularly against a support bearing open in upward direction and terminating the guideway — by means of a spring element (3.3) bearing with one end against a point intermediate the pivot shaft (2.11) and the lever outer end (2.2) while its other end takes support upon the filter funnel (3) ;

the sensing lever (1) is a one-armed lever having its inner end coupled to a horizontal pivot shaft (1.10) mounted fast with the filter ;

intermediate the pivot shaft (1.10) and the outer end (1.2) of the sensing lever (1), the inner end of the activating lever (2) is coupled to the sensing lever (1) via a shaft (1.3) carried in an elongated hole (2.3) ;

the closure body (3.21) sealing the anti-drip valve (3.4) from above is secured to the activating lever (2) in the area of its pivot shaft (2.11) ;

the ascending ramp (4.1) possesses a bevelled portion deflecting the outer end (2.2) of the activating lever (2) in upward direction.

20. The coffee maker as claimed in any one of the claims 1 to 15, characterized by the following features (Fig. 3e) :

the activating lever (2) is a two-armed lever with a horizontal pivot shaft (2.10) mounted fast with the filter and extends, preferably at approximately the level of the anti-drip valve (3.4), from its outer end (2.2) radially towards the filter axis (A), ;

the inner end of the activating lever (2) is coupled to the inner end of the sensing lever (1) by means of a shaft (1.3) carried in an elongated hole (2.3) ;

the sensing lever (1) is movably carried in a vertical guideway (3.1) arranged fast with the filter vertically underneath the anti-drip valve (3.4) by means of a horizontal shaft (1.11) arranged intermediate its inner end and its outer end (1.2), with the guideway (3.1) preferably terminating in a support bearing open in upward direction ; a spring element (3.3) bearing with one end against the sensing lever (1) intermediate the inner end of the sensing lever and the shaft (1.11) while its other end takes support upon the filter on which it is mounted biases the sensing lever in the direction of its rest position ;

the closure body (3.21) sealing the anti-drip valve (3.4) from above is secured to the sensing lever (1) in the area of its pivot shaft (1.11) ;

the ascending ramp (4.1) possesses a bevelled portion deflecting the outer end (2.2) of the activating lever (2) in downward direction.

21. The coffee maker as claimed in any one of the claims 1 to 15, characterized by the following features (Fig. 3f) :

the activating lever (2) extends — preferably at approximately the level of the anti-drip valve (3.4) — from its outer end (2.2) radially towards the filter axis (A) while its inner end extends over and beyond the filter axis ; vertically below the anti-drip valve (3.4), it possesses a horizontal pivot shaft (2.11) which is urged downwardly in a vertical guideway (3.1) fast with the filter — particularly against a support bearing open in upward direction and terminating the guideway (3.1) — by means of a spring element (3.3) bearing with one end against the lever inner end (2.4) while its other end takes support upon the filter funnel (3) ;

the sensing lever (1) is a one-armed lever with a horizontal pivot shaft (1.10) mounted fast with the filter ;

between its outer end (2.2) and its pivot bearing (2.11), the activating lever (2) is coupled to the sensing lever (1) via a shaft (1.3) carried in an elongated hole (2.3) at a point intermediate the pivot shaft (1.10) and the outer end (1.2) of the sensing lever ;

the closure body (3.21) sealing the anti-drip valve (3.4) from above is secured to the activating lever (2) in the area of its pivot shaft (2.11) ;

the ascending ramp (4.1) possesses a bevelled portion deflecting the outer end (2.2) of the activating lever (2) in downward direction.

22. The coffee maker as claimed in any one of the claims 1 to 15, characterized by the following features (Fig. 3 g) :

the activating lever (2) extends — preferably at approximately the level of the anti-drip valve (3.4) — from its outer end (2.2) radially towards the filter axis (A) while its inner end extends over and beyond the filter axis ; vertically below the anti-drip valve (3.4), it possesses a horizontal pivot shaft (2.11) which is urged downwardly in a vertical guideway (3.1) fast with the filter — particularly against a support bearing open in upward direction and terminating the guideway (3.1) — by means of a spring element (3.3) bearing with one end against a point intermediate the pivot shaft (2.11) and the outer end (2.2) of the activating lever (2) while its other end takes support upon the filter funnel (3) ;

the sensing lever (1) is a one-armed lever with a horizontal pivot shaft (1.10) mounted fast with the filter ;

at its inner end the activating lever (2) is coupled to the sensing lever (1) via a shaft (1.3) carried in an elongated hole (2.3) at a point intermediate the pivot shaft (1.10) and the outer end (1.2) of the sensing lever ;

the closure body (3.21) sealing the anti-drip valve (3.4) from above is secured to the activating lever (2) in the area of its pivot shaft (2.11) ;

the ascending ramp (4.1) possesses a bevelled portion deflecting the outer end (2.2) of the activating lever (2) in upward direction.

23. The coffee maker as claimed in any one of the claims 1 to 22, characterized in that the filter funnel (3) is pivotal about a shaft extending vertically on its periphery and on the outer wall of the coffee maker housing (4), with two vertically superposed pivot bearings being provided, each comprising an axle stub (3.5) and a bearing eye (4.2).

24. The coffee maker as claimed in claim 23, characterized in that the filter funnel (3) is removably hinged to the pivot bearings (3.5, 4.2).

25. The coffee maker as claimed in claim 24, characterized in that one of the two pivot bearings serves a both radially guiding and axially supporting function while the other pivot bearing serves only a radially guiding function.

26. The coffee maker as claimed in any one of the claims 23 to 25, characterized in that the two axle stubs (3.5) are of different length.

27. The coffee maker as claimed in claim 26, characterized in that the axle stub of the one pivot bearing extends downwardly while the axle stub of the other pivot bearing extends upwardly, with the relative distance of the roots of the axle stubs differing from the relative distance of the bearing eyes by more than the length of the shorter axle stub and by less than the length of the longer axle stub.

28. The coffee maker as claimed in any one of the claims 23 to 27, characterized in that the axle stubs and the bearing eyes are integrally formed with the filter funnel (3) and the coffee maker housing (4), respectively.

## Revendications

1. Cafetière électrique avec soupape antigouttes (3.4) à la sortie d'écoulement d'un entonnoir à filtre (3) que l'on peut enlever du boîtier (4) de la cafetière et/ou que l'on peut basculer et enlever de ce boîtier, étant précisé que la soupape anti-gouttes (3.4) est contrainte par un ressort (3.3) dans la direction de fermeture et qu'elle est amenée et maintenue en position ouverte au moyen d'un levier à contact (1) qui est porté, avec liberté de rotation, sur l'entonnoir à filtre (3) et que la face supérieure du pot à café (5) — en particulier de son couvercle — placé par dessous peut dévier, caractérisée en ce qu'il est en outre prévu un levier d'activation (2) qui est en liaison active avec le levier à contact (1) de façon telle que, lorsque l'on amène le pot à café (5) et l'entonnoir à filtre (3) dans leur position respective de travail, le levier d'activation (2) est tout d'abord dévié pour passer de sa position de repos à sa position de travail avant que le levier à contact (1) soit dévié par le couvercle (5.1) du pot pour ouvrir la soupape anti-gouttes (3.4).

2. Cafetière selon la revendication 1, caractérisée en ce que l'on peut faire dévier le levier d'activation (2) pour l'amener dans sa position de travail en introduisant ou en basculant l'entonnoir à filtre (3) pour l'amener dans sa position de travail.

3. Cafetière selon la revendication 2, caractérisée en ce que lorsque l'on introduit, puis que l'on bascule l'entonnoir à filtre pour l'amener dans sa position de travail, il vient en butée contre une paroi du boîtier (4) de la cafetière de façon telle que des parties de cette paroi font dévier le levier d'activation (2) pour l'amener dans sa position de travail.

4. Cafetière selon la revendication 3, caractérisée en ce que la paroi du boîtier présente une rampe d'accostage pour faire dévier le levier d'activation (2).

5. Cafetière selon l'une des revendications 1 à 4, caractérisée en ce que la déviation du levier d'activation (2) peut faire basculer le levier au contact (1) dans sa position de contact dans laquelle — et uniquement dans laquelle — il peut être sollicité par le couvercle (5.1) du pot pour ouvrir la soupape antigouttes (3.4).

6. Cafetière selon la revendication 5, caractérisée en ce que, dans sa position de repos et dans la position de repos du levier d'activation (2), le levier à contact (1) s'étend au-dessus de l'arête inférieure du boîtier de l'entonnoir à filtre (3) et que la déviation du levier d'activation (2) peut le faire pivoter dans l'espace situé en-dessous de l'arête inférieure du boîtier de l'entonnoir à filtre.

7. Cafetière selon l'une des revendications 5 ou 6, caractérisée en ce que le couvercle (5.1) du pot peut faire rebasculer, en le ramenant en direction de sa position de repos, le levier à contact (1), amené et maintenu en position de contact par la déviation du levier d'activation (2), étant précisé que ce rebasculement du levier à contact opère l'ouverture de la soupape antigouttes (3.4).

8. Cafetière selon l'une des revendications 1 à 7, caractérisée en ce que le levier à contact (1), le levier d'activation (2) et l'obturateur (3.20, 3.21) de la soupape antigouttes (3.4) sont articulés l'un dans l'autre de façon telle que le même ressort (3.3), qui agit sur l'un des deux leviers (1 ou 2), pousse ou tire les deux leviers (1 et 2) dans leur position de repos et l'obturateur (3.20, 3.21) dans sa position de fermeture.

9. Cafetière selon l'une des revendications 1 à 8, caractérisée en ce que le levier à contact (1) et le levier d'activation (2) peuvent pivoter dans le même plan d'action dirigé radialement par rapport à l'axe vertical (A) du filtre.

10. Cafetière selon l'une des revendications 4 à 9, caractérisée en ce que, lorsque l'on introduit l'entonnoir à filtre (3), ou qu'on le bascule pour l'introduire, l'extrémité extérieure (2.2) du levier d'activation (2) qui se trouve alors dans sa position de repos vient reposer sur la rampe d'accostage (4.1) dès que l'entonnoir à filtre s'approche de sa position de travail d'au maximum 3 cm et d'au minimum 1 cm.

11. Cafetière selon l'une des revendications 4 à 10, caractérisée en ce que la rampe d'accostage présente, pour l'extrémité extérieure (2.2) du levier d'activation (2), un crantage dans lequel cette extrémité vient se cranter en glissant lorsque le levier d'activation (2) atteint sa position de travail.

12. Cafetière selon l'une des revendications 1 à 11, caractérisée en ce que l'extrémité extérieure (1.2), déviée par le levier d'activation (2), du levier à contact (1) peut être sollicitée par le bord périphérique du couvercle (5.1) du pot dès que la distance radiale entre le pot à café et sa position prescrite passe en-dessous d'une valeur d'au maximum 5 cm et d'au minimum 0,5 cm.

13. Cafetière selon l'une des revendications 1 à 12, caractérisée en ce que le levier à contact (1) et le levier d'activation (2) sont en liaison positive l'un avec l'autre par l'intermédiaire d'un axe d'articulation (1.3) qui porte dans une lumière (2.3).

14. Cafetière selon l'une des revendications 1 à 13, caractérisée en ce que la déviation du levier à contact (1) par le levier d'activation (2) se fait autour d'un axe de pivotement (1.10, 1.11), l'extrémité extérieure (1.2) du levier à contact (1) se trouvant à une distance de cet axe d'au moins 4 fois plus grande que l'axe d'articulation (1.3) du levier d'activation (2).

15. Cafetière selon l'une des revendications 1 à 14, caractérisée en ce que l'obturateur (3.20, 3.21) porte, de façon flexible, sur le levier à contact ou sur le levier d'activation (1 ou 2) dans la zone de leur axe de pivotement (1.11 ou 2.11).

16. Cafetière selon l'une des revendications 1 à 15, caractérisée par les caractéristiques suivantes (figure 3a) :

le levier d'activation (2) s'étend — de préférence à peu près à la hauteur de la soupape antigouttes (3.4) — depuis son extrémité extérieure (2.2), radialement en direction de l'axe (A) du filtre, et avec son extrémité intérieure au-delà de cet axe ; il possède, verticalement et en-dessous de la soupape antigouttes (3.4), un axe de pivotement horizontal (2.11) qu'un ressort (3.3) qui s'applique sur l'extrémité intérieure (2.4) du levier et qui, d'autre part, est appuyé sur l'entonnoir à filtre (3), pousse, dans un guidage vertical (3.1) fixe par rapport au filtre, vers le haut — en particulier en direction d'un palier de butée qui ferme le guidage (3.1) et qui est ouvert vers le bas ;

le levier à contact (1) est un levier à deux bras avec axe de pivotement horizontal (1.10) dont la portée est fixe par rapport au filtre ;

l'extrémité intérieure du levier à contact (1) est, par l'intermédiaire d'un axe horizontal (1.3) guidé dans une lumière (2.3), articulée sur le levier d'activation (2), entre l'extrémité extérieure (2.2) et l'axe de pivotement (2.11) de ce dernier.

l'obturateur (3.20) qui assure l'étanchéité de par le bas, de la soupape antigouttes (3.4) est fixé au levier d'activation (2) dans la zone de l'axe de pivotement (2.11) de ce dernier.

la rampe d'accostage (4.1) présente une pente d'accostage qui dévie vers le haut l'extrémité extérieure (2.2) du levier d'activation (2).

17. Cafetière selon l'une des revendications 1 à 15, caractérisée par les caractéristiques suivantes (figure 3b) :

le levier d'activation (2) s'étend — de préférence à peu près à la hauteur de la soupape antigouttes (3.4) — depuis son extrémité extérieure (2.2), radialement en direction de l'axe (A) du filtre, et avec son extrémité intérieure au-delà de cet axe ; il possède, verticalement et en-dessous de la soupape antigouttes (3.4), un axe de pivotement horizontal (2.11) qu'un ressort (3.3) qui s'applique sur l'extrémité extérieure (2.2) du levier et qui, d'autre part, est appuyé sur l'entonnoir à filtre (3), pousse, dans un guidage vertical (3.1) fixe par rapport au filtre, vers le haut — en particulier en direction d'un palier de butée qui ferme le guidage (3.1) et qui est ouvert vers le bas ;

le levier à contact (1) est un levier à deux bras avec axe de pivotement horizontal (1.10) dont la portée est fixe par rapport au filtre ;

l'extrémité intérieure du levier à contact (1) est, par l'intermédiaire d'un axe horizontal (1.3) guidé dans une lumière (2.3), articulée sur l'extrémité intérieure (2.4) du levier d'activation (2) ;

l'obturateur (3.20) qui assure l'étanchéité, de par le bas, de la soupape antigouttes (3.4) est fixé au levier d'activation (2) dans la zone de l'axe de pivotement (2.11) de ce dernier.

la rampe d'accostage (4.1) présente une pente d'accostage qui dévie vers le bas l'extrémité extérieure (2.2) du levier d'activation (2).

18. Cafetière selon l'une des revendications 1 à 15, caractérisée par les caractéristiques suivantes (figure 3c).

le levier d'activation (2) est un levier à deux bras avec axe de pivotement horizontal (2.10) dont la portée est fixe par rapport au filtre et s'étend — de préférence à peu près à la hauteur de la soupape antigouttes (3.4) — depuis sont extrémité extérieure (2.2), radialement en direction de l'axe (A) de filtre ;

le levier à contact (1) présente, à son extrémité intérieure et au moyen d'un axe horizontal (1.11), une portée mobile dans un guidage vertical (3.1) disposé verticalement sous la soupape antigouttes (3.4) et fixe par rapport au filtre, étant précisé que de préférence ce guidage (3.1) se termine en un palier de butée ouvert vers le bas ;

l'extrémité intérieure du levier d'activation (2) est articulée au levier à contact (1) par l'intermédiaire d'un axe (1.3) guidé dans une lumière (2.3), et le levier à contact (1) est sollicité en direction de sa position de repos par un ressort (3.3) qui s'applique entre cette articulation et l'axe de pivotement (1.11) du levier à contact et qui par ailleurs est appuyé fixe par rapport au filtre ;

l'obturateur (3.20), qui assure l'étanchéité de par le bas, de la soupape antigouttes (3.4) est fixé au levier à contact (1) dans la zone de l'axe de pivotement (1.11) de ce dernier ;

la rampe d'accostage (4.1) présente une pente d'accostage qui dévie vers le haut l'extrémité extérieure (2.2) du levier d'activation (2).

19. Cafetière selon l'une des revendications 1 à 15, caractérisée par les caractéristiques suivantes (figure 3d) :

le levier d'activation (2) s'étend — de préférence à peu près à la hauteur de la soupape antigouttes (3.4) — depuis son extrémité extérieure (2.2), radialement en direction de l'axe (A) du filtre, et avec son extrémité intérieure au-delà de cet axe ; il possède, verticalement et en-dessous de la soupape antigouttes (3.4), un axe de pivotement horizontal (2.11) qu'un ressort (3.3) qui s'applique sur l'extrémité extérieure (2.2) du levier et qui, d'autre part, est appuyé sur l'entonnoir à filtre (3), pousse, dans un guidage vertical (3.1) fixe par rapport au filtre, vers le bas — en particulier en direction d'un palier de butée qui ferme le guidage (3.1) et qui est ouvert vers le haut ;

le levier à contact (1) est un levier à un seul bras qui, pas son extrémité intérieure, est articulé à un axe de pivotement horizontal (1.10) dont la portée est fixe par rapport au filtre :

l'extrémité intérieure du levier d'activation (2) est, par l'intermédiaire d'un axe (1.3) guidé dans une lumière (2.3). articulée au levier à contact (1) entre l'axe de pivotement (1.10) de l'extrémité extérieure (1.2) de ce levier ;

l'obturateur (3.21), qui assure l'étanchéité de par le haut, de la soupape antigouttes (3.4) est fixé au levier d'activation (2) dans la zone de l'axe de pivotement (2.11) de ce levier ;

la rampe d'accostage (4.1) présente une pente d'accostage qui. dévie vers le haut l'extrémité extérieure (2.2) du levier d'activation (2).

20. Cafetière selon l'une des revendications 1 à 15, caractérisée par les caractéristiques suivantes (figure 3e) :

le levier d'activation (2) est un levier à deux bras avec axe de pivotement horizontal (2.10) dont la portée est fixe par rapport au filtre et s'étend — de préférence à peu près à la hauteur de la soupape antigouttes (3.4) — depuis son extrémité extérieure (2.2), radialement en direction de l'axe (A) de filtre ;

l'extrémité intérieure du levier d'activation (2) est, par l'intermédiaire d'un axe (1.3) guidé dans une lumière (2.3), articulée à l'extrémité intérieure du levier à contact (1) ;

le levier à contact (1) présente, au moyen d'un axe horizontal (1.11) placé entre son extrémité intérieure et son extrémité extérieure (1.2), une portée mobile dans un guidage vertical (3.1) disposé verticalement sous la soupape antigouttes (3.4) et fixe par rapport au filtre, étant précisé que ce guidage (3.1) se termine de préférence en un palier de butée ouvert vers le haut ; ce levier à contact est sollicité dans la direction de sa position de repos par un ressort (3.3) qui s'applique au levier à contact (1) entre l'extrémité intérieure de ce levier et l'axe (1.11) et qui est d'autre part appuyé fixe par rapport au filtre ;

l'obturateur (3.21), qui assure l'étanchéité de par en haut, de la soupape antigouttes (3.4) est fixé au levier à contact (1) dans la zone de l'axe de pivotement (1.11) de ce levier ;

la rampe d'accostage (4.1) présente une pente d'accostage qui dévie vers le bas l'extrémité extérieure (2.2) du levier d'activation (2).

21. Cafetière selon l'une des revendications 1 à 15, caractérisée par les caractéristiques suivantes (figure 3f) :

le levier d'activation (2) s'étend — de préférence à peu près à la hauteur de la soupape antigouttes (3.4) — depuis son extrémité extérieure (2.2), radialement en direction de l'axe (A) du filtre, et avec son extrémité intérieure au-delà de cet axe ; il possède, verticalement et en-dessous de la soupape antigouttes (3.4), un axe de pivotement horizontal (2.11) qu'un ressort (3.3) qui s'applique sur l'extrémité intérieure (2.4) du levier et qui, d'autre part, est appuyé sur l'entonnoir à filtre (3), pousse, dans un guidage vertical (3.1) fixe par rapport au filtre, vers le bas — en particulier en direction d'un palier de butée qui ferme le guidage (3.1) et qui est ouvert vers le haut ;

le levier à contact (1) est un levier à deux bras avec axe de pivotement horizontal (1.10) dont la portée est fixe par rapport au filtre ;

le levier d'activation (2) est, entre son extrémité extérieure (2.2) et sa portée de pivotement (2.11), articulé au levier à contact (1) par l'intermédiaire d'un axe (1.3) guidé dans une lumière (2.3), et ceci, entre l'axe de pivotement (1.10) et l'extrémité extérieure (1.2) de ce levier à contact ;

l'obturateur (3.21), qui assure l'étanchéité de par le haut, de la soupape antigouttes (3.4) est fixé au levier d'activation (2) dans la zone de l'axe de pivotement (2.11) de ce levier ;

la rampe d'accostage (4.1) présente une pente d'accostage qui dévie vers le bas l'extrémité extérieure (2.2) du levier d'activation (2).

22. Cafetière selon l'une des revendications 1 à 15, caractérisée par les caractéristiques suivantes (figure 3 g) :

le levier d'activation (2) s'étend — de préférence à peu près à la hauteur de la soupape antigouttes (3.4) — depuis son extrémité extérieure (2.2), radialement en direction de l'axe (A) du filtre, et avec son extrémité intérieure au-delà de cet axe : il possède, verticalement et en-dessous de la soupape antigouttes (3.4), un axe de pivotement horizontal (2.11) qu'un ressort (3.3) qui s'applique entre cet axe et l'extrémité extérieure (2.2) du levier d'activation (2) et qui, d'autre part, est appuyé sur l'entonnoir à filtre (3), pousse, dans un guidage vertical (3.1) fixe par rapport au filtre, vers le bas — en particulier en direction d'un palier de butée qui ferme le guidage (3.1) et qui est ouvert vers le haut ;

le levier à contact (1) est un levier à deux bras avec axe de pivotement horizontal (1.10) dont la portée est fixe par rapport au filtre ;

le levier d'activation (2) est, à son extrémité intérieure et par l'intermédiaire d'un axe (1.3) guidé dans une lumière (2.3), articulé au levier à contact (1) et ceci entre l'axe de pivotement (1.10) et l'extrémité extérieure (1.2) de ce levier à contact ;

l'obturateur (3.21), qui assure l'étanchéité de par le haut, de la soupape antigouttes (3.4) est fixé au levier d'activation (2) dans la zone de l'axe de pivotement (2.11) de ce levier ;

la rampe d'accostage (4.1) présente une pente d'accostage qui dévie vers le haut l'extrémité extérieure (2.2) du levier d'activation (2).

23. Cafetière selon l'une des revendications 1 à 22, caractérisée en ce que l'entonnoir à filtre (3) peut pivoter autour d'un axe dirigé perpendiculairement à sa périphérie et à la paroi extérieure du boîtier (4) de la cafetière, étant précisé que sont prévus deux paliers de pivotement qui sont disposés verticalement l'un au-dessus de l'autre et sont chacun constitués d'un embout formant axe (3.5) et d'un œillet formant palier (4.2).

24. Cafetière selon la revendication 1 à 3, caractérisée en ce que l'entonnoir à filtre (3) est suspendu de façon détachable aux paliers de pivotement (3.5, 4.2).

25. Cafetière selon la revendication 24, caractérisée en ce que seule l'un des deux paliers de pivotement exerce aussi bien une fonction de guidage radial qu'une fonction d'appui axial. tandis que l'autre n'exerce qu'une fonction de guidage radial.

26. Cafetière selon l'une des revendications 23 à 25. caractérisée en ce que les deux embouts formant axe (3.5) possèdent une longueur différente.

27. Cafetière selon la revendication 26, caractérisée en ce que l'embout formant axe de l'un des paliers de pivotement est dirigé vers le bas et que l'embout formant axe de l'autre palier de pivotement est dirigé vers le haut, étant précisé que la distance des points situés au pied des embouts formant axe est différente de la distance des œillets formant palier de plus que la longueur de l'embout le plus court et de moins que la longueur de l'embout le plus long.

28. Cafetière selon l'une des revendications 23 à 27, caractérisée en ce que l'embout formant axe et les œillets formant palier sont venus de forme sur l'entonnoir à filtre (3) ou sur le boîtier (4) de la cafetière.

13

# FIG.1

# FIG.2

1

FIG.3a

FIG.3b

FIG.3c

FIG.3d

2

FIG.3e

FIG.3f

FIG.3g